(19) Europäisches Patentamt / European Patent Office / Office européen des brevets

(11) **EP 4 393 997 A1**

(12) **EUROPEAN PATENT APPLICATION**
published in accordance with Art. 153(4) EPC

(43) Date of publication:
**03.07.2024 Bulletin 2024/27**

(21) Application number: **22861286.7**

(22) Date of filing: **22.08.2022**

(51) International Patent Classification (IPC):
*C08L 67/00* (2006.01)     *B29C 45/00* (2006.01)
*C08G 63/60* (2006.01)     *C08J 3/22* (2006.01)
*C08K 3/04* (2006.01)     *C08K 5/00* (2006.01)

(52) Cooperative Patent Classification (CPC):
**B29C 45/00; C08G 63/60; C08J 3/22; C08K 3/04; C08K 5/00; C08L 67/00**

(86) International application number:
**PCT/JP2022/031486**

(87) International publication number:
**WO 2023/026998 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2021 JP 2021136442**

(71) Applicant: **Sumitomo Chemical Company, Limited Tokyo 103-6020 (JP)**

(72) Inventor: **SAITO, Shintaro Tsukuba-shi, Ibaraki 300-3294 (JP)**

(74) Representative: **Vossius & Partner Patentanwälte Rechtsanwälte mbB Siebertstrasse 3 81675 München (DE)**

(54) **LIQUID CRYSTAL POLYESTER PELLET COMPOSITION AND INJECTION MOLDED ARTICLE**

(57)     A liquid crystal polyester pellet composition comprising a first pellet and a second pellet is employed as a molding material for an injection molded article. The first pellet is a pellet comprising a liquid crystal polyester; the second pellet is a pellet comprising an organic pigment, an organic dye or carbon black and a liquid crystal polyester, and the second pellet is a pellet different from the first pellet; and a melt viscosity ratio represented by melt viscosity of the second pellet/melt viscosity of the first pellet is less than 3.2.

**EP 4 393 997 A1**

**Description**

Technical Field

The present invention relates to a liquid crystal polyester pellet composition and an injection molded article.
The present application claims priority to Japanese Patent Application No. 2021-136442, filed in Japan on August 24, 2021, the contents of which are incorporated herein.

Background Art

Liquid crystal polyesters are known to have a high flowability, heat resistance and dimensional accuracy.
Usually, it is rare to use a liquid crystal polyester alone, and a liquid crystal polyester is used as a liquid crystal polyester composition containing a filling material so as to meet the required properties (such as flexural properties and impact resistance) in various applications. Molded articles produced from such liquid crystal polyester compositions are known to be lightweight and also high in strength.
The use of such liquid crystal polyester compositions as molding materials is expanding in various applications. Particularly, in the information and communication field such as personal computers and mobile phones, components are rapidly becoming more highly integrated, smaller, thinner, and lower in profiles. For such molded articles in the information and communication field, the amount of liquid crystal polyester compositions to be used is increasing significantly.
Some molded articles in the information and communication field described above are required to be molded articles which are colored (colored molded articles). One of the methods for producing these colored molded articles is a masterbatch method. In the masterbatch method, a natural pellet and a pellet (masterbatch) containing a pigment higher in concentration than that of usual one are mixed to prepare a pellet mixture. This pellet mixture is then used as a molding material and is subjected to injection molding, so that an injection molded article having the desired color tone can be obtained.
This masterbatch method is used for various resin materials because it enables a high concentration of pigment to be easily added to a base material, and the pigment to be added efficiently. In particular, colored molded articles, a wide variety of which need to be produced, can be easily produced by mixing the base material and each of masterbatches containing different pigments.
For example, Patent Literature 1 discloses a method for producing a colored molded article, the method comprising blending a liquid crystal polymer resin pellet A and a polyalkylene terephthalate resin pellet B including a colorant and directly molding it. In this Patent Literature 1, a pellet containing a colorant and another thermoplastic resin that is relatively excellent in compatibility with a liquid crystal polymer resin is employed as a masterbatch.

Citation List

Patent Literature

Patent Literature 1
Japanese Patent Laid-Open No. 06-248165

Summary of Invention

Technical Problem

However, the injection molded articles produced by using a masterbatch method have the following problem: variations in color tone tend to occur between the molded articles particularly when a masterbatch containing a high concentration of pigment is blended therein.
The present invention has been made in view of such circumstances, and an object of the present invention is to provide injection molded articles having reduced variations in color tone, and a liquid crystal polyester pellet composition as a molding material for the injection molded article.

Solution to Problem

The present inventors have made a study on the color tone of a colored molded article produced by using a liquid crystal polyester composition as a molding material. In the study, they have found that when a colored molded article is produced using a masterbatch method, the variations in color tone between the molded articles increases in some cases, and that in other cases, variations in color tone between the molded articles are suppressed. Through a further study, they have found that such a difference in variations in color tone is related to the melt viscosity ratio between a so-called natural pellet and a masterbatch, and have completed the present invention.

In order to solve the above problems, the present invention includes the following aspects.

[1] A liquid crystal polyester pellet composition comprising a first pellet and a second pellet; wherein: the first pellet is a pellet comprising a liquid crystal polyester; the second pellet is a pellet comprising an organic pigment, an organic dye or carbon black and a liquid crystal polyester, and the second pellet is different from the first pellet; and a melt viscosity ratio represented by melt viscosity of the second pellet/melt viscosity of the first pellet is less than 3.2.

[2] The liquid crystal polyester pellet composition according to [1], wherein a total content of the organic pigment, the organic dye and the carbon black in the second pellet is 1 part by mass or more and 40 parts by mass or less, with respect to 100 parts by mass of the liquid crystal polyester in the second pellet.

[3] The liquid crystal polyester pellet composition according to [1] or [2], wherein a content of the second pellet is 1 part by mass or more and 20 parts by mass or less, with respect to 100 parts by mass of the first pellet.

[4] An injection molded article, characterized in that it is produced by using the liquid crystal polyester pellet composition according to any one of [1] to [3].

Advantageous Effects of Invention

According to the liquid crystal polyester pellet composition of the present invention, injection molded articles having reduced variations in color tone can be produced.

According to the injection molded article of the present invention, variations in color tone between the molded articles are suppressed.

As used herein, the expression "variations in color tone between the molded articles" means, for example, deflection of the values of L*, a*, and b* for each molded article when L*, a*, and b* are measured with a colorimeter for each molded article.

Description of Embodiments

(Liquid crystal polyester pellet composition)

A liquid crystal polyester pellet composition according to one aspect of the present invention comprises a first pellet and a second pellet.

The first pellet is a pellet comprising a liquid crystal polyester.

The second pellet is a pellet comprising an organic pigment, an organic dye or carbon black and a liquid crystal polyester, and the second pellet is different from the first pellet.

In the liquid crystal polyester pellet composition according to the present aspect, a melt viscosity ratio represented by melt viscosity of the second pellet/melt viscosity of the first pellet is less than 3.2.

One embodiment of the liquid crystal polyester pellet composition is a pellet mixture comprising a first pellet and a second pellet. In the present embodiment, the first pellet is a so-called natural pellet, and the second pellet is a masterbatch.

The first pellet and second pellet will be described in detail below.

The first pellet and second pellet in the present embodiment are obtained, for example, by extruding a liquid crystal polyester pellet composition to produce a strand and cutting the strand into pellets while taking off the strand, as described later. The first pellet and second pellet each mean an aggregate consisting of a plurality of pellets.

The components contained in each pellet (a liquid crystal polyester, an organic pigment, an organic dye or carbon black, and optional components other than these) will be described together later.

<First pellet>

In the liquid crystal polyester pellet composition of one embodiment, the first pellet is a pellet comprising a liquid crystal polyester. Each of a plurality of pellets constituting the first pellet comprises the liquid crystal polyester.

The content of the liquid crystal polyester in the first pellet is preferably 40% by mass or more, more preferably 50% by mass or more, and even more preferably 55% by mass or more, with respect to the total mass (100% by mass) of the first pellet.

The content of the liquid crystal polyester is preferably 90% by mass or less, more preferably 80% by mass or less, and even more preferably 70% by mass or less, with respect to the total mass (100% by mass) of the first pellet.

For example, the content of the liquid crystal polyester is preferably 40% by mass or more and 90% by mass or less, more preferably 50% by mass or more and 80% by mass or less, and even more preferably 55% by mass or more and 70% by mass or less, with respect to the total mass (100% by mass) of the first pellet.

In addition to the liquid crystal polyester, the first pellet may comprise optional components other than the liquid crystal polyester. Examples of the other optional component include a filler; a resin other than the liquid crystal polyester; a colorant; and any additive well known in the art.

The filler may be an inorganic filling material or an organic filling material, which is determined as appropriate depending on the application and others, and in view of imparting mechanical strength, the inorganic filling material is preferably used. The fillers may be used singly or in combination of two or more thereof.

When the first pellet comprises a filler, the content of the filler is preferably 10% by mass or more, more preferably 20% by mass or more, and even more preferably 30% by mass or more, with respect to the total mass (100% by mass) of the first pellet.

The content of the filler is preferably 60% by mass or less, more preferably 50% by mass or less, and even more preferably 45% by mass or less, with respect to the total mass (100% by mass) of the first pellet.

For example, the content of the filler is preferably 10% by mass or more and 60% by mass or less, more preferably 20% by mass or more and 50% by mass or less, and even more preferably 30% by mass or more and 45% or less, with respect to the total mass (100% by mass) of the first pellet.

When the first pellet comprises a filler, the content of the filler is preferably 40 parts by mass or more, more preferably 45 parts by mass or more, and even more preferably 50 parts by mass or more, with respect to 100 parts by mass of the liquid crystal polyester in the first pellet.

The content of the filler is preferably 80 parts by mass or less, more preferably 75 parts by mass or less, and even more preferably 70 parts by mass or less, with respect to 100 parts by mass of the liquid crystal polyester in the first pellet.

For example, the content of the filler is preferably 40 parts by mass or more and 80 parts by mass or less, more preferably 45 parts by mass or more and 75 parts by mass or less, and even more preferably 50 parts by mass or more and 70 parts by mass or less, with respect to 100 parts by mass of the liquid crystal polyester in the first pellet.

When the content of the filler is within the above preferred range, the mechanical strength of a molded product produced by using the pellet containing the filler is further improved.

The first pellet may further contain a colorant. In the present embodiment, the first pellet is a pellet having a content of the colorant of 0% by mass or more and less than 5% by mass with respect to the total mass (100% by mass) of the first pellet. That is, the first pellet in the present embodiment means, among a plurality of pellets constituting a pellet mixture, a pellet containing a liquid crystal polyester but no colorant, or a pellet having a content of the colorant of more than 0% by mass and less than 5% by mass and containing a liquid crystal polyester.

The colorants may be used singly or in combination of two or more thereof. The colorant does not encompass any organic pigment, organic dye or carbon black.

The first pellet may be an aggregate of pellets consisting of only one type of pellet, or an aggregate of pellets consisting of two or more types of pellets.

The first pellet that is an aggregate of pellets consisting of only one type of pellet encompasses:

an aggregate of pellets containing no colorant; and
an aggregate of pellets having a content of the colorant of more than 0% by mass and less than 5% by mass.

The first pellet that is an aggregate of pellets consisting of two or more types of pellets encompasses:

an aggregate of two or more types of pellets containing no colorant;
an aggregate of two or more types of pellets having a content of the colorant of more than 0% by mass and less than 5% by mass;
an aggregate of mixed pellets of a pellet containing no colorant and a pellet having a content of the colorant of more than 0% by mass and less than 5% by mass;
an aggregate of pellets different in types or the contents of the liquid crystal polyester contained therein; and
an aggregate of pellets different in types or the contents of the colorant contained therein.

<Second pellet>

In the liquid crystal polyester pellet composition of one embodiment, the second pellet is a pellet comprising an organic pigment, an organic dye or carbon black and a liquid crystal polyester. A plurality of pellets constituting the second pellet each comprises an organic pigment, an organic dye or carbon black and a liquid crystal polyester.

The second pellet is a pellet different from the first pellet.

The first pellet and the second pellet are different from each other in whether they contain an organic pigment, organic dye or carbon black.

When the first pellet is removed from the pellet mixture, a pellet comprising at least one selected from the group consisting of an organic pigment, an organic dye and carbon black, and a liquid crystal polyester, among a plurality of remaining pellets, is referred to as a second pellet.

In the present embodiment, the second pellet is preferably a pellet having a total content of the organic pigment, the organic dye and the carbon black of 0.5% by mass or more with respect to the total mass (100% by mass) of the second pellet.

The total content of the organic pigment, organic dye and carbon black (hereinafter collectively referred to as "colorant A") in the second pellet is preferably 1% by mass or more, more preferably 5% by mass or more, and even more preferably 8% by mass or more, with respect to the total mass (100% by mass) of the second pellet.

The total content of the colorant A is preferably 35% by mass or less, more preferably 30% by mass or less, and even more preferably 25% by mass or less, with respect to the total mass (100% by mass) of the second pellet.

For example, the total content of the colorant A is preferably 1% by mass or more and 35% by mass or less, more preferably 5% by mass or more and 30% by mass or less, and even more preferably 8% by mass or more and 25% or less, with respect to the total mass (100% by mass) of the second pellet.

When the total content of the colorant A in the second pellet is equal to or more than the above preferred lower limit, the amount of second pellet (masterbatch) necessary for producing an injection molded article having a specific color strength can be reduced, resulting in a reduced storage amount of the second pellet.

When the total content of the colorant A in the second pellet is equal to or less than the above preferred upper limit, the dispersibility of the colorant A in the second pellet is further improved, and the variations in color tone of the second pellet and the variations in color tone of injection molded articles produced by using the second pellet is further suppressed.

The content of the liquid crystal polyester in the second pellet is preferably 65% by mass or more, more preferably 70% by mass or more, and even more preferably 75% by mass or more, with respect to the total mass (100% by mass) of the second pellet.

The content of the liquid crystal polyester is preferably 99% by mass or less, more preferably 95% by mass or less, and even more preferably 92% by mass or less, with respect to the total mass (100% by mass) of the second pellet.

For example, the content of the liquid crystal polyester is preferably 65% by mass or more and 99% by mass or less, more preferably 70% by mass or more and 95% by mass or less, even more preferably 75% by mass or more and 92% by mass or less, with respect to the total mass (100% by mass) of the second pellet.

The total content of the colorant A in the second pellet is preferably 1 part by mass or more, more preferably 5 parts by mass or more, and even more preferably 10 parts by mass or more, with respect to 100 parts by mass of the liquid crystal polyester in the second pellet.

The total content of the colorant A is preferably 40 parts by mass or less, more preferably 35 parts by mass or less, and even more preferably 30 parts by mass or less, with respect to 100 parts by mass of the liquid crystal polyester in the second pellet.

For example, the total content of the colorant A is preferably 1 part by mass or more and 40 parts by mass or less, more preferably 5 parts by mass or more and 35 parts by mass or less, and even more preferably 10 parts by mass or more and 30 parts by mass or less, with respect to 100 parts by mass of the liquid crystal polyester in the second pellet.

When the total content of the colorant A with respect to the liquid crystal polyester in the second pellet is within the above preferred range, the dispersibility of the colorant A in the second pellet is improved and the variations in color tone of the second pellet is further suppressed. In addition, the second pellet and the above-described first pellet are better mixed during injection molding, and variations in color tone is further suppressed in injection molded articles produced by using the liquid crystal polyester pellet composition of the present embodiment.

In addition to the organic pigment, organic dye or carbon black and liquid crystal polyester, the second pellet may comprise optional components other than these. Examples of the other optional component include a filler; a resin other than the liquid crystal polyester; the other colorant; and any additive well known in the art.

The second pellet is used in mixture with the above-described first pellet. Therefore, when the content of the filler in the second pellet is smaller, the second pellet is more superior in the general-purpose properties. The content of the filler in the second pellet is, for example, preferably 10 parts by mass or less, and more preferably 5 parts by mass or less, with respect to 100 parts by mass of the liquid crystal polyester in the second pellet.

The second pellet may be an aggregate of pellets consisting of only one type of pellet, or an aggregate of pellets consisting of two or more types of pellets.

The second pellet that is an aggregate of pellets consisting of two or more types of pellets encompasses:

an aggregate of mixed pellets of a pellet containing an organic pigment and a pellet containing an organic dye;
an aggregate of mixed pellets of a pellet containing an organic pigment and a pellet containing carbon black;
an aggregate of mixed pellets of a pellet containing an organic dye and a pellet containing carbon black;

an aggregate of mixed pellets of a pellet containing an organic pigment, a pellet containing an organic dye and a pellet containing carbon black;

an aggregate of pellets different in types or the contents of the liquid crystal polyester contained therein; and

an aggregate of pellets different in types or the contents of the organic pigment, organic dye or carbon black.

<Pellet mixture>

The total content of the first pellet and the second pellet in the pellet mixture is preferably 90% by mass or more, more preferably 95% by mass or more, and even more preferably 99% by mass or more, with respect to the total mass (100% by mass) of the pellet mixture, and it may be 100% by mass, that is, the pellet mixture of the present embodiment may consist of the first pellet and the second pellet.

The content of each of the first pellet and second pellet in the pellet mixture can be selected as appropriate, depending on the concentration and type of the colorant (organic pigment, organic dye or carbon black) contained in the second pellet.

The content of the first pellet in the pellet mixture is preferably 85% by mass or more, more preferably 93% by mass or more, and even more preferably 95% by mass or more, with respect to the total mass (100% by mass) of the pellet mixture.

The content of the first pellet is preferably 99.9% by mass or less, more preferably 99.5% by mass or less, and even more preferably 99% by mass or less, with respect to the total mass (100% by mass) of the pellet mixture.

For example, the content of the first pellet is preferably 85% by mass or more and 99.9% by mass or less, more preferably 93% by mass or more and 99.5% by mass or less, and even more preferably 95% by mass or more and 99% or less, with respect to the total mass (100% by mass) of the pellet mixture.

The content of the second pellet in the pellet mixture is preferably 0.1% by mass or more, more preferably 0.5% by mass or more, and even more preferably 1% by mass or more, with respect to the total mass (100% by mass) of the pellet mixture.

The content of the second pellet is preferably 15% by mass or less, more preferably 7% by mass or less, and even more preferably 5% by mass or less, with respect to the total mass (100% by mass) of the pellet mixture.

For example, the content of the second pellet is preferably 0.1% by mass or more and 15% by mass or less, more preferably 0.5% by mass or more and 7% by mass or less, and even more preferably 1% by mass or more and 5% or less, with respect to the total mass (100% by mass) of the pellet mixture.

The content of the second pellet in the pellet mixture is preferably 1 part by mass or more, more preferably 2 parts by mass or more, and even more preferably 3 parts by mass or more, with respect to 100 parts by mass of the first pellet.

The content of the second pellet is preferably 20 parts by mass or less, more preferably 8 parts by mass or less, and even more preferably 6 parts by mass or less, with respect to 100 parts by mass of the first pellet.

For example, the content of the second pellet is preferably 1 part by mass or more and 20 parts by mass or less, more preferably 2 parts by mass or more and 8 parts by mass or less, and even more preferably 3 parts by mass or more and 6 parts by mass or less, with respect to 100 parts by mass of the first pellet.

When the content of the second pellet with respect to the first pellet in the pellet mixture is within the above preferred range, the variations in color tone of injection molded articles produced by using the pellet mixture are further suppressed.

[Melt viscosity ratio between first pellet and second pellet]

In the liquid crystal polyester pellet composition of one embodiment, the melt viscosity ratio represented by the melt viscosity of the second pellet/the melt viscosity of the first pellet is less than 3.2, preferably 2.5 or less, more preferably 2 or less, and even more preferably 1.8 or less.

The melt viscosity ratio is preferably 0.1 or more, more preferably 0.5 or more, and even more preferably 0.7 or more.

For example, the melt viscosity ratio is preferably 0.1 or more and less than 3.2, more preferably 0.1 or more and 2.5 or less, even more preferably 0.5 or more and 2 or less, and further more preferably 0.7 or more and 1.8 or less.

When the melt viscosity ratio is less than 3.2, the first pellet and the second pellet are mixed well during injection molding to improve the dispersibility of the organic pigment, organic dye or carbon black of the second pellet, so that variations in color tone is suppressed in injection molded articles produced by using the liquid crystal polyester pellet composition of the present embodiment.

When the melt viscosity ratio is within the above preferred range, or in other words, when the melt viscosity of the first pellet and the melt viscosity of the second pellet are closer to each other, the resin deterioration due to the processing temperature during injection molding or others is less likely to occur, and such a melt viscosity ratio is thus preferable in view of heat resistance.

The melt viscosity of the first pellet is preferably 10 Pa·s or more, more preferably 15 Pa·s or more, and even more preferably 20 Pa·s or more.

The melt viscosity of the first pellet is preferably 45 Pa·s or less, more preferably 40 Pa·s or less, and even more preferably 35 Pa·s or less.

For example, the melt viscosity of the first pellet is preferably 10 Pa·s or more and 45 Pa·s or less, more preferably 15 Pa·s or more and 40 Pa·s or less, and even more preferably 20 Pa·s or more and 35 Pa·s or less.

The melt viscosity of the second pellet is preferably 1 Pa·s or more, and more preferably 2 Pa·s or more.

The melt viscosity of the second pellet is preferably 60 Pa·s or less, more preferably 50 Pa·s or less, and even more preferably 45 Pa·s or less.

For example, the melt viscosity of the second pellet is preferably 1 Pa·s or more and 60 Pa·s or less, more preferably 1 Pa·s or more and 50 Pa·s or less, and even more preferably 2 Pa·s or more and 50 Pa·s or less.

When the melt viscosity of the first pellet and the melt viscosity of the second pellet are within the above respective preferred ranges, the first pellet and the second pellet are better mixed during injection molding, and variations in color tone is further suppressed in injection molded articles produced by using the liquid crystal polyester pellet composition of the present embodiment.

[Method for measuring melt viscosities of first pellet and second pellet]

The melt viscosity of each of the first pellet and second pellet can be measured with a capillary rheometer ("CAPILOGRAPH-1D", manufactured by TOYO SEIKI CO., LTD). A capillary with $\phi$ of 0.5 mm $\times$ 10 mm can be used.

The melt viscosity of the first pellet or the second pellet can be measured in the following manner: 20 g of the first pellet or the second pellet that has been dried at 120°C for 3 hours is placed into a cylinder set at 350°C, which is the same temperature as the cylinder temperature during injection molding; and the melt viscosity is measured at a shear rate of 1000 s$^{-1}$ in accordance with ISO 11443.

In a case where the liquid crystal polyester pellet composition of the present embodiment contains multiple types of the first pellet and multiple types of the second pellet, these pellets may satisfy the relationship in which the melt viscosity ratio between at least one of the multiple types of first pellets and at least one of the multiple types of second pellets is less than 3.2. However, it is preferable to satisfy the relationship in which the melt viscosity ratio between the first pellet having the highest melt viscosity among the multiple types of first pellets and at least one of the multiple types of second pellets is less than 3.2, and it is more preferable to satisfy the relationship in which the melt viscosity ratio between the melt viscosity of the multiple types of first pellets as a whole and the melt viscosity of the multiple types of second pellets as a whole is less than 3.2.

For the method for measuring the melt viscosity of a multiple types of first pellets as a whole in [Method for measuring melt viscosity of first pellet and second pellet] described above, the melt viscosity of a multiple types of first pellets can be determined in the following manner: each of the first pellets is taken out from all the first pellets contained in the liquid crystalline polyester pellet composition of the present embodiment at a proportion according to its content, in such a manner that the total amount taken out is 20 g; and the melt viscosity is measured by the above-described method. Alternatively, all the first pellets to be contained in the liquid crystal polyester pellet composition of the present embodiment may be melt-kneaded to produce new pellets, and 20 g of the new pellets may be used to measure the melt viscosity of the multiple types of first pellets as a whole.

The melt viscosities of the first pellet and second pellet can be adjusted by appropriately changing the type of liquid crystal polyester contained in each pellet; the content and type of the filler, if a filler is contained therein; the content of colorant A; and others.

More specifically, a method for controlling the melt viscosity of each of the first pellet and the second pellet by tailoring each material is as follows.

For the liquid crystal polyester, the molecular weight of the liquid crystal polyester can be changed by adjusting the polymerization temperature and time, whereby the melt viscosity of the liquid crystal polyester can be adjusted, and thus, the melt viscosity of each pellet contained in the liquid crystal polyester can be also controlled.

If the filler is contained, the melt viscosity of each pellet can be controlled by increasing or decreasing the content of the filler. For example, when the filler content is increased, the melt viscosity of each pellet tends to increase.

The melt viscosity of each pellet can also be controlled by an additive included in the pellet. For example, the melt viscosity of each pellet can be increased by adding a particulate material of 5 $\mu$m or less, a so-called thickener. The melt viscosity of each pellet can also be decreased by adding a low-molecular-weight organic compound such as a plasticizer.

The first pellet and second pellet in the present embodiment are distinguished from fine powders and dusts generated from each pellet.

The fine powders and dusts generated from each pellet refers to, for example, those having a volume average particle diameter of 500 μm or less.

<<Components included in first pellet and second pellet>>

In the liquid crystal polyester pellet composition of the present embodiment, the first pellet is a pellet comprising a liquid crystal polyester and may comprise optional components other than the liquid crystal polyester as necessary. The second pellet is a pellet comprising an organic pigment, an organic dye or carbon black and a liquid crystal polyester and may comprise optional components other than these as necessary.

• Liquid crystal polyester

In the present embodiment, the liquid crystal polyester is a polyester that exhibits liquid crystallinity in a molten state, and it is preferably a liquid crystal polyester melting at a temperature of 450°C or less.
A suitable liquid crystal polyester contained in the pellet in the present embodiment may be a liquid crystal polyester amide, a liquid crystal polyester ether, a liquid crystal polyester carbonate, or a liquid crystal polyester imide.
The liquid crystal polyester as used herein is preferably a wholly aromatic liquid crystal polyester obtained by using only aromatic compounds as starting material monomers.
Typical examples of such a liquid crystal polyester include a liquid crystal polyester obtained by polymerizing (polycondensing) an aromatic hydroxycarboxylic acid, and an aromatic dicarboxylic acid, and at least one compound selected from the group consisting of an aromatic diol, an aromatic hydroxylamine, and an aromatic diamine; a liquid crystal polyester obtained by polymerizing multiple types of aromatic hydroxycarboxylic acids; a liquid crystal polyester obtained by polymerizing an aromatic dicarboxylic acid and at least one compound selected from the group consisting of an aromatic diol, an aromatic hydroxylamine and an aromatic diamine; and a liquid crystal polyester obtained by polymerizing a polyester such as polyethylene terephthalate with an aromatic hydroxycarboxylic acid.
Here, the aromatic hydroxycarboxylic acid, the aromatic dicarboxylic acid, the aromatic diol, the aromatic hydroxylamine and the aromatic diamine are each independently partly or fully replaced with a polymerizable derivative thereof.
Examples of the polymerizable derivative of a compound having a carboxyl group such as an aromatic hydroxycarboxylic acid and an aromatic dicarboxylic acid include an ester obtained by converting a carboxyl group to an alkoxycarbonyl group or an aryloxycarbonyl group; an acid halide obtained by converting a carboxyl group to a haloformyl group; and an acid anhydride obtained by converting a carboxyl group into an acyloxycarbonyl group. Examples of the polymerizable derivative of a compound having a hydroxyl group such as an aromatic hydroxycarboxylic acid, an aromatic diol and an aromatic hydroxylamine include an acylated product obtained by acylating a hydroxyl group to convert it into an acyloxyl group. Examples of the polymerizable derivative of a compound having an amino group such as an aromatic hydroxylamine and an aromatic diamine include an acylated product obtained by acylating an amino group to convert it into an acylamino group.
Such a liquid crystal polyester preferably has a repeating unit represented by the following formula (1) (hereinafter sometimes referred to as "repeat unit (1)"), and it more preferably has the repeating unit (1) and a repeating unit represented by the following formula (2) (hereinafter sometimes referred to as "repeat unit (2)") and a repeating unit represented by the following formula (3) (hereinafter referred to as "repeat unit (3)").

$$(1) \qquad -O-Ar^1-CO-$$

$$(2) \qquad -CO-Ar^2-CO-$$

$$(3) \qquad -X-Ar^3-Y-$$

wherein $Ar^1$ represents a phenylene group, a naphthylene group or a biphenylylene group; $Ar^2$ and $Ar^3$ each independently represent a phenylene group, a naphthylene group, a biphenylylene group, or a group represented by the following formula (4); X and Y each independently represent an oxygen atom or an imino group (-NH-); and the hydrogen atoms in each of the groups represented by $Ar^1$, $Ar^2$ or $Ar^3$ each are independently optionally replaced with a halogen atom, an alkyl group or an aryl group.

$$(4) \qquad -Ar^4-Z-Ar^5-$$

wherein $Ar^4$ and $Ar^5$ each independently represent a phenylene group or a naphthylene group; and Z represents an oxygen atom, a sulfur atom, a carbonyl group, a sulfonyl group or an alkylidene group.
Examples of the halogen atom include a fluorine atom, a chlorine atom, a bromine atom and an iodine atom.

Examples of the alkyl group include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group and an n-decyl group, and the alkyl group preferably has 1 to 10 carbon atoms. Examples of the aryl group include a phenyl group, an o-tolyl group, an m-tolyl group, a p-tolyl group, a 1-naphthyl group and a 2-naphthyl group, and the aryl group preferably has 6 to 20 carbon atoms.

When the hydrogen atom(s) is(are) replaced with any of these groups, the number of the hydrogen(s) to be replaced therewith is preferably 2 or less and more preferably 1 or less for each of the groups represented by $Ar^1$, $Ar^2$ or $Ar^3$, independently.

Examples of the alkylidene group include a methylene group, an ethylidene group, an isopropylidene group, an n-butylidene group and a 2-ethylhexylidene group, and the alkylidene group preferably has 1 to 10 carbon atoms.

The repeating unit (1) is a repeating unit derived from a predetermined aromatic hydroxycarboxylic acid. The repeating unit (1) is preferably a repeating unit wherein $Ar^1$ is a 1,4-phenylene group (a repeating unit derived from p-hydroxybenzoic acid), and a repeating unit wherein $Ar^1$ is a 2,6-naphthylene group (a repeating unit derived from 6-hydroxy-2-naphthoic acid), and more preferably a repeating unit wherein $Ar^1$ is a 1,4-phenylene group.

As used herein, the term "derived from" means that the chemical structure of the functional group contributing to polymerization changes due to polymerization of the starting material monomers but no other structural changes occur.

The repeating unit (2) is a repeating unit derived from a predetermined aromatic dicarboxylic acid. The repeating unit (2) is preferably a repeating unit wherein $Ar^2$ is a 1,4-phenylene group (a repeating unit derived from terephthalic acid); a repeating unit wherein $Ar^2$ is a 1,3-phenylene group (a repeating unit derived from isophthalic acid); a repeating unit wherein $Ar^2$ is a 2,6-naphthylene group (a repeating unit derived from 2,6-naphthalene dicarboxylic acid); and a repeating unit wherein $Ar^2$ is a diphenyl ether-4,4'-diyl group (a repeating unit derived from diphenyl ether-4,4'-dicarboxylic acid), and more preferably a repeating units wherein $Ar^2$ is a 1,4-phenylene group; and a repeating unit wherein $Ar^2$ is a 1,3-phenylene group.

The repeating unit (3) is a repeating unit derived from a predetermined aromatic diol, aromatic hydroxylamine or aromatic diamine. The repeating unit (3) is preferably a repeating unit wherein $Ar^3$ is a 1,4-phenylene group (a repeating unit derived from hydroquinone, p-aminophenol or p-phenylenediamine), and a repeating unit wherein $Ar^3$ is a 4,4'-biphenylylene group (a repeating unit derived from 4,4'-dihydroxybiphenyl, 4-amino-4'-hydroxybiphenyl or 4,4'-diaminobiphenyl), and more preferably a repeating unit wherein $Ar^3$ is a 4,4'-biphenylylene group.

The content of the repeating unit (1) is preferably 30 mol% or more, more preferably 30 mol% or more and 80 mol% or less, even more preferably 40 mol% or more and 70 mol% or less and particularly preferably 45 mol% or more and 65 mol% or less, with respect to the total amount of all of the repeating units (a value obtained by dividing the mass of each repeating unit constituting a liquid crystal polyester by the formula mass of the each repeating unit to determine the amount-of-substance equivalent (mol) of the each repeating unit and summing up all of the amount-of-substance equivalents (mol)).

The content of the repeating unit (2) is preferably 35 mol% or less, more preferably 10 mol% or more and 35 mol% or less, even more preferably 15 mol% or more and 30 mol% or less, and particularly preferably 17.5 mol% or more and 27.5 mol% or less, with respect to the total amount of all the repeating units.

The content of the repeating unit (3) is preferably 35 mol% or less, more preferably 10 mol% or more and 35 mol% or less, even more preferably 15 mol% or more and 30 mol% or less, and particularly preferably 17.5 mol% or more and 27.5 mol% or less, with respect to the total amount of all the repeating units.

When the content of the repeating unit (1) is higher, it is easier to improve the melt flowability, heat resistance, and strength and rigidity. However, if the content of the repeating unit (1) is too much, the melt temperature and melt viscosity tend to increase, and accordingly, the temperature necessary for molding tends to increase.

The ratio between the content of repeating unit (2) and the content of repeating unit (3) is preferably 0.9/1 to 1/0.9, more preferably 0.95/1 to 1/0.95 and even more preferably 0.98/1 to 1/0.98, as represented by [the content of the repeating unit (2)]/[the content of the repeating unit (3)] (mol/mol).

The suitable liquid crystal polyester contained in the pellet in the present embodiment may have two or more types of repeating units (1) to (3), each independently. The liquid crystal polyester may have repeating units other than the repeating units (1) to (3), but the content thereof is preferably 10 mol% or less and more preferably 5 mol% or less, with respect to the total amount of all the repeating units.

The liquid crystal polyester preferably has, as the repeating unit (3), a repeating unit wherein each of X and Y is an oxygen atom, that is, a repeating unit derived from a predetermined aromatic diol, because such a liquid crystal polyester tends to be low in melt viscosity, and the liquid crystal polyester more preferably has, as the repeating unit (3), only a repeating unit wherein each of X and Y is an oxygen atom.

Such a liquid crystal polyester preferably is produced by subjecting starting material monomers corresponding to the repeating units constituting it to melt polymerization, and subjecting the resulting polymer (hereinafter sometimes referred to as "prepolymer") to solid-state polymerization. As a result, a highmolecular-weight liquid crystal polyester having a high heat resistance and strength and rigidity can be produced with good operability.

The melt polymerization may be performed in the presence of a catalyst. Examples of the catalyst include a metal compound such as magnesium acetate, stannous acetate, tetrabutyl titanate, lead acetate, sodium acetate, potassium acetate or antimony trioxide, and a nitrogen-containing heterocyclic compound such as 4-(dimethylamino)pyridine or 1-methylimidazole, and the nitrogen-containing heterocyclic compound is preferably used.

The flow starting temperature of the suitable liquid crystal polyester comprised in the pellet in the present embodiment is preferably 260°C or more, more preferably 260°C or more and 400°C or less, and even more preferably 260°C or more and 380°C or less.

When the flow starting temperature of such a liquid crystal polyester is higher, the heat resistance and strength of the liquid crystal polyester tend to be improved. On the other hand, when the flow starting temperature of the liquid crystal polyester exceeds 400°C, the melting temperature and melt viscosity of the liquid crystal polyester tend to increase, and therefore, the temperature required to mold the liquid crystal polyester tends to be higher.

The flow starting temperature, as used herein, of the liquid crystal polyester is also referred to as a flow temperature or fluidization temperature, and is a temperature that serves as a measure for the molecular weight of a liquid crystal polyester (see, "Liquid Crystal Polymers - Synthesis, Molding, Applications -", June 5, 1987, p. 95, edited by Naoyuki Koide: CMC Publishing Co., Ltd.).

The flow starting temperature is a temperature at which a viscosity of 4,800 Pa·s (48,000 poise) is exhibited, when a liquid crystal polyester is melted and extruded through a nozzle under a load of 9.8 MPa (100 kg/cm$^2$) while increasing the temperature at a rate of 4°C/min, using a capillary rheometer, the nozzle having an inner diameter of 1 mm and a length of 10 mm.

In the present embodiment, the liquid crystal polyesters may be used singly or in combination of two or more thereof.

When two or more liquid crystal polyesters are used in combination, the liquid crystal polyesters having different flow starting temperatures from each other are preferably used in combination, as described later.

The first pellet and the second pellet may comprise the same liquid crystal polyester or may comprises different liquid crystal polyesters from each other. The first pellet and the second pellet preferably comprise the same liquid crystal polyester, in view of compatibility.

• Organic pigment, organic dye or carbon black

In the present embodiment, the second pellet contains an organic pigment, organic dye or carbon black, and the second pellet serves as a masterbatch.

The colorant contained in the second pellet includes at least one selected from the group consisting of an organic pigment, an organic dye and carbon black. The colorant to be used in the second pellet is preferably at least one selected from the group consisting of an organic pigment and carbon black, in view of heat resistance.

•• Organic pigment

Examples of the organic pigment include a perylenebased derivative, a quinacudrine-based derivative, an anthraquinone-based derivative, a phthalocyanine-based derivative, a triazine-based derivative and a dichlorophenylene bisnaphthalene carbamide-based derivative.

The particle diameter of the organic pigment is preferably 250 nm or less and more preferably 100 nm or less, in view of colorability of the pellet. As used herein, the particle diameter of the organic pigment is a value obtained by direct observation with a scanning electron microscope or by measurement by laser diffraction or laser scattering.

In view of heat resistance, the organic pigment is preferably one having a decomposition starting temperature (the weight loss of 5% by mass) of 400°C or more and more preferably one having a decomposition starting temperature (weight loss of 5% by mass) of 420°C or more, and the organic pigment having a higher decomposition starting temperature (the weight loss of 5% by mass) is more preferred.

In view of heat resistance, the organic pigment is preferably one having a melting point of 250°C or more and more preferably 275°C or more, and the organic pigment having a higher melting point is more preferred.

•• Carbon black

Carbon black is used as a black pigment. For example, a white-colored natural pellet can be mixed with a masterbatch containing carbon black to produce a graycolored molded article.

• Optional components

Examples of the optional components include a filler; a resin other than the liquid crystal polyester; and an additive well known in the art.

•• Filler

The filler may be an inorganic filling material or an organic filling material, which is selected as appropriate depending on the application and others. In view of imparting mechanical strength, the inorganic filling material is preferably used, and it is particularly suitably used for the first pellet.

[Inorganic filling material]

The inorganic filling material may be a fibrous filling material, a plate-like filling material, or a particulate filling material.

Examples of the fibrous filling material include a glass fiber; a carbon fiber such as a PAN-based carbon fiber or a pitch-based carbon fiber; a ceramic fiber such as a silica fiber, an alumina fiber or a silica-alumina fiber; and a metal fiber such as a stainless-steel fiber. Examples of the fibrous filling material also include a whisker such as a potassium titanate whisker, a barium titanate whisker, a wollastonite whisker, an aluminum borate whisker, a silicon nitride whisker and a silicon carbide whisker. Among them, the glass fiber is preferred.

Examples of the plate-like filling material include talc, mica, graphite, wollastonite, a glass flake, barium sulfate and calcium carbonate. The mica may be muscovite, phlogopite, fluorophlogopite or tetrasilicon mica. Among them, talc or mica is preferred.

Examples of the particulate filling material include silica, alumina, titanium oxide, a glass bead, a glass balloon, boron nitride, silicon carbide and calcium carbonate.

The inorganic filling material to be used in the present embodiment is preferably at least one selected from the group consisting of a glass fiber, talc and mica, and more preferably at least one selected from the group consisting of a glass fiber and talc.

The glass fiber will be described as a fibrous filling material below.

Examples of the glass fiber include those produced by various methods, such as a chopped glass fiber of long fiber type and a milled glass fiber of short fiber type. In the present embodiment, two or more of these can also be used in combination.

Examples of the glass fiber type include E-glass, A-glass, C-glass, D-glass, AR-glass, R-glass, S-glass, and mixtures thereof. Among them, the E-glass is preferred because it is excellent in strength and is easily available.

As the above-described glass fiber, a weakly alkaline fiber is excellent in mechanical strength (tensile strength and Izod impact strength) and can be preferably used. In particular, it is preferable to use the glass fiber having a silicon oxide content of 50% by mass or more and 80% by mass or less with respect to the total mass of the glass fiber, and it is more preferable to use the glass fiber having a silicon oxide content of 65% by mass or more and 77% by mass or less with respect to the total mass of the glass fiber.

The glass fiber may be a fiber treated with a coupling agent such as a silane-based coupling agent or a titanium-based coupling agent, as necessary.

The glass fiber may be coated with a thermoplastic resin such as a urethane resin, an acrylic resin, an ethylene/vinyl acetate copolymer, or a thermosetting resin such as an epoxy resin. The glass fiber may be also treated with a sizing agent.

The number average fiber length of the glass fiber, which is a material to be subjected to melt-kneading, is preferably 30 $\mu$m or more and 5,000 $\mu$m or less. When the number average fiber length of the glass fiber is 30 $\mu$m or more, the glass fiber exhibits a more improved effect as a reinforcing material in a molded product obtained from a pellet containing the glass fiber, as compared to when the number average fiber length is less than 30 $\mu$m. The number average fiber length of the glass fiber is more preferably 50 $\mu$m or more and even more preferably 70 $\mu$m or more.

When the number average fiber length of the glass fiber is 5,000 $\mu$m or less, the number average fiber length of the glass fiber in the pellet is more easily adjusted and thin-wall flowability is more improved, as compared to when the number average fiber length exceeds 5,000 $\mu$m. The number average fiber length of the glass fiber is more preferably 3,500 $\mu$m or less.

The fiber diameter (single fiber diameter) of the glass fiber, which is a material to be subjected to melt-kneading, is preferably 5 $\mu$m or more and 20 $\mu$m or less. When the fiber diameter of the glass fiber is 5 $\mu$m or more, the glass fiber is more easily handled and production efficiency can be improved, as compared to when the fiber diameter is less than 5 $\mu$m. The fiber diameter of the glass fiber is more preferably 5.5 $\mu$m or more and even more preferably 6 $\mu$m or more. When the fiber diameter of the glass fiber is 20 $\mu$m or less, the flowability of a liquid crystal polyester pellet composition is improved and in addition, the effect of the glass fiber as a reinforcing material for a molded product is more improved, as compared to when the fiber diameter is more than 20 $\mu$m. The fiber diameter of the glass fiber is more preferably 17 $\mu$m or less and even more preferably 15 $\mu$m or less.

The glass fiber diameter does not substantially change after melt-kneading.

As used herein, the "number average fiber length of the glass fiber, which is a material" means a value obtained by measurement by the method described in JIS R3420 "7.8 Chopped strand length", unless otherwise specified.

As used herein, the "fiber diameter of the glass fiber, which is a material" means a value obtained by measurement by "Method A" of the methods described in JIS R3420 "7.6 Single fiber diameter", unless otherwise specified.

The number average fiber length of the glass fiber in the pellet of the present embodiment is preferably 20 $\mu$m or more, more preferably 30 $\mu$m or more, and even more preferably 40 $\mu$m or more. On the other hand, it is preferably 1,000 $\mu$m or less, more preferably 800 $\mu$m or less, and even more preferably 500 $\mu$m or less, in view of flowability of the liquid crystal polyester pellet composition.

Here, the number average fiber length of the glass fiber in the pellet can be measured by the following method. 5 g of the pellets was heated in air in a muffle furnace at 600°C for 8 hours to remove a resin; and 500 or more glass fibers were randomly selected from the residual glass fibers and the fiber length of each of the selected glass fibers was measured at a 100-fold magnification, using a video microscope (VH1000 manufactured by Keyence). Here, the number average fiber length Ln can be calculated using the following formula:

$$Ln = \Sigma(Ni \times Li)/\Sigma(Ni)$$

Li is a measured value of the fiber length of each glass fiber; and Ni is a value obtained by dividing the number of glass fibers each having a fiber length included in Li by the total number of glass fibers that were subjected to measurement.

In the liquid crystal polyester pellet composition of the present embodiment, the content of the glass fibers is preferably 5 parts by mass or more, more preferably 10 parts by mass or more, and even more preferably 15 parts by mass or more, with respect to 100 parts by mass of the liquid crystal polyester. The content of the glass fibers is preferably 100 parts by mass or less, more preferably 85 parts by mass or less, and even more preferably 70 parts by mass or less, with respect to 100 parts by mass of the liquid crystal polyester. The above upper limit value and lower limit value can be arbitrarily combined.

Talc will be described as a plate-like filling material below.

Talc that can be used in the present embodiment is a ground product of minerals consisting of magnesium hydroxide and silicate minerals. In addition, the talc that can be used in the present embodiment has a structure in which three octahedral structures composed of magnesium (Mg) oxides/hydroxides are sandwiched between four tetrahedral structures formed by silicon (Si) oxides having four atoms.

The method for producing such talc may be a known production method, and examples thereof include a dry grinding method such as an attrition grinding method involving use of a roller mill, a Raymond mill or the like; an impact grinding method involving use of an adomizer, a hammer mill, a micron mill or the like; and a collision grinding method involving use of a jet mill, a ball mill or the like.

Alternatively, a wet grinding method may be used in which a talc powder obtained by grinding is dispersed in water to form a slurry with a flowable viscosity, and the slurry is ground using a ball mill, a bead mill, a wet jet mill, Discoplex, or the like. Among the above production methods, the dry grinding method is preferred in view of low cost and easy availability.

The surface of talc may be treated with a coupling agent or the like for the purpose of improving the wettability between talc and the liquid crystal polyester. Talc that has been subjected to heat treatment may be also used for the purpose of removing impurities and hardening the talc. Compressed talc may be also used for the purpose of facilitating handling.

The residue on a 45 $\mu$m sieve of talc is preferably 1.0% by mass or less. When the residue on a 45 $\mu$m sieve is 1.0% by mass or less, clogging in parts of thin walls in molds can be suppressed during molding pellets to improve moldability, so that the strength of the thin-wall of the resulting molded product can be improved. The residue on 45 $\mu$m sieve of talc is preferably 0.8% by mass or less and more preferably 0.6% by mass or less, with respect to the total amount of talc.

Herein, the residue on a 45 $\mu$m sieve of talc is a value obtained by measurement in accordance with JIS K 5101-14-1 "Pigment test method - Part 14: Sieve residue - Section 1: Wet method (manual method)".

The ignition loss (Ig. Loss) of talc is preferably 7% by mass or less, more preferably 6% by mass or less, and particularly preferably 5% by mass or less. When the Ig. Loss is lower, degradation of the liquid crystal polyester is suppressed more and blisters are less likely to occur.

Herein, Ig. Loss is a value obtained by measurement in accordance with JIS M8853.

In the present embodiment, the volume average particle diameter of talc is preferably 5.0 $\mu$m or more, more preferably 5.5 $\mu$m or more, and even more preferably 6.0 $\mu$m or more. The volume average particle diameter is preferably 25 $\mu$m or less, more preferably 24.5 $\mu$m or less, and even more preferably 24 $\mu$m or less. The above upper limit value and lower limit value can be arbitrarily combined.

In the present embodiment, the volume average particle diameter of talc can be measured by a laser diffraction method. The volume average particle diameter can be calculated for talc dispersed in water, using a scattering-type particle diameter distribution measurement device "LA-950V2" manufactured by HORIBA, Ltd. as a measurement device, under the following measurement conditions.

Measurement conditions

Particle refractive index: 1.59 - 0.1i
Dispersion medium: water
Refractive index of dispersion medium: 1.33

Mica will be described as a plate-like filling material below.

Mica is a ground silicate mineral containing aluminum, potassium, magnesium, sodium, iron, and the like. Mica is a mineral having a structure in which two or three octahedral structures composed of metal oxides/hydroxides is sandwiched between four tetrahedral structures formed by oxides of three atoms of silicon (Si) and one atom of aluminum (Al).

The mica that can be used in the present embodiment may be any of muscovite, phlogopite, fluorophlogopite, tetrasilicic mica, or an artificially produced synthetic mica. Two or more types of these may be contained.

The mica that can be used in the present embodiment preferably substantially consists of only muscovite.

Examples of the method for producing the mica that can be used in the present embodiment include a water jet grinding method, a wet grinding method, a dry ball milling method, a pressure roller milling method, an air jet milling method, and a dry grinding method involving use of an impact grinder such as an atomizer. The mica produced by a wet grinding method is preferably used, because the mica can be ground thinly and finely.

When performing the wet grinding method, the mica before grinding is dispersed in water. At that time, in order to improve the dispersion efficiency of the mica before grinding, it is common to add an additive such as polyaluminum chloride, aluminum sulfate, aluminum sulfate, ferrous sulfate, ferric sulfate, copperas chloride, poly iron sulfate, polyferric chloride, an iron-silica inorganic polymer coagulant, a ferric chloride-silica inorganic polymer coagulant, or a coagulation-precipitation agent or a precipitation aid such as slaked lime ($Ca(OH)_2$), caustic soda (NaOH) or soda ash ($Na_2CO_3$). However, these additives may cause degradation of a liquid crystal polyester. Therefore, the mica that can be used in the present embodiment is preferably one that has been wet ground without a coagulation-precipitation agent or a precipitation aid.

In the present embodiment, the volume average particle diameter of mica is preferably 20 $\mu$m or more, more preferably 21 $\mu$m or more, and even more preferably 22 $\mu$m or more. The volume average particle diameter is preferably 45 $\mu$m or less, more preferably 44 $\mu$m or less, and even more preferably 43 $\mu$m or less. The above upper limit value and lower limit value can be arbitrarily combined.

In the present embodiment, the volume average particle diameter of mica can be measured by a laser diffraction method. The volume average particle diameter can be calculated for mica dispersed in water, using a scattering-type particle diameter distribution measurement device "LA-950V2" manufactured by HORIBA, Ltd. as a measurement device, under the following measurement conditions.

Measurement conditions

Particle refractive index: 1.57 - 0.1i
Dispersion medium: water
Refractive index of dispersion medium: 1.33

The mica having such a volume average particle diameter has a good miscibility with a liquid crystal polyester, and can further improve the flowability of the liquid crystal polyester pellet composition of the present embodiment.

In the liquid crystal polyester pellet composition of the present embodiment, the content of the inorganic filling material is preferably more than 0 parts by mass and 120 parts by mass or less, more preferably 5 parts by mass or more and 110 parts by mass or less, even more preferably 20 parts by mass or more and 105 parts by mass or less, and particularly preferably 30 parts by mass or more and 105 parts by mass or less, with respect to 100 parts by mass of the liquid crystal polyester.

When the content of the inorganic filling material in the liquid crystal polyester pellet composition of the present embodiment is within the above preferred range, injection molded articles produced by using the liquid crystal polyester pellet composition have further suppressed variations in color tone.

[Organic filling material]

The organic filling material in the liquid crystal polyester pellet composition (pellet mixture) of the present embodiment may be a fibrous filling material, a plate-like filling material, or a particulate filling material.
Examples of the fibrous filling material include a polyester fiber, an aramid fiber and a cellulose fiber. Examples of the particulate filling material include an insoluble and infusible polymer such as a homopolymer of para-hydroxybenzoic acid.

•• Resins other than liquid crystal polyester

Examples of the resin other than liquid crystal polyester include a thermoplastic resin other than an aromatic sulfone, such as a polypropylene, a polyamide, a polyester other than a liquid crystal polyester, a polyphenylene sulfide, a polyether sulfone, a polyether ketone, a polycarbonate, a polyphenylene ether or polyetherimide; and a thermosetting resin such as a phenol resin, an epoxy resin, a polyimide resin and a cyanate resin.

•• Additives well known in the art

Examples of the additive well known in the art include a mold release agent such as fluorocarbon, a higher fatty acid, a higher fatty acid ester, a higher alcohol or a metal soap; a colorant other than an organic pigment, an organic dye and carbon black; an antioxidant, a heat stabilizer, an ultraviolet absorbing agent, an antistatic agent, a surfactant, a flame retardant, a flame retardant aid and a plasticizer.

[Mold release agent]

In the present embodiment, when the liquid crystal polyester pellet composition contains a mold release agent, it can be improved in moldability. Examples of the mold release agent include tetrafluoroethylene; montanic acid or a salt, an ester or a half ester thereof; stearyl alcohol, stearamide and polyethylene wax, and preferable examples include tetrafluoroethylene and a fatty acid ester of pentaerythritol.

[Colorants other than organic pigment, organic dye or carbon black]

Examples of the colorant other than an organic pigment, an organic dye or carbon black include an inorganic pigment such as titanium oxide, iron oxide, lead oxide, chromium oxide and Ultramarine Blue.

[Antioxidant, heat stabilizer]

In the present embodiment, it is preferable to use as an antioxidant or heat stabilizer, for example, a hindered phenol, hydroquinone, a phosphite or substitution products thereof, or the like.

[Ultraviolet absorbing agent]

In the present embodiment, it is preferable to use, as an ultraviolet absorbing agent, for example, resorcinol, a salicylate, benzotriazole, benzophenone, or the like.
The liquid crystal polyester pellet composition of the present embodiment may contain components other than the first pellet or the second pellet. Examples of the other component include fine powders or dusts generated from each of the first and second pellets; a pellet that do not fall under either the first pellet or the second pellet; an additive having an external lubricant effect such as a higher fatty acid, a higher fatty acid ester or a fluorocarbon-based surfactant.
As described above, in the liquid crystal polyester pellet composition of one embodiment, a specific melt viscosity ratio is established between the first pellet comprising a liquid crystal polyester and the second pellet comprising an organic pigment, an organic dye or carbon black and a liquid crystal polyester.
A liquid crystal polyester is known to have a low melt viscosity and an excellent flowability during melting, unlike a crystalline or amorphous resin. However, the liquid crystal polyester is different in behavior during melting from the other crystalline resins and amorphous resins due to its viscosity behavior, and when using a masterbatch method, the melt viscosity ratio between a natural pellet and a masterbatch (a first pellet and a second pellet) is important.

The liquid crystal polyester pellet composition of the present embodiment is controlled such that the melt viscosity ratio represented by the melt viscosity of the second pellet/the melt viscosity of the first pellet is less than 3.2. Therefore, the molten second pellet easily spreads throughout the molten first pellet during injection molding so that the first pellet and the second pellet mix well, and thus, injection molded articles having suppressed variations in color tone can be produced.

The liquid crystal polyester pellet composition of the present embodiment has the following aspects.

<1> A liquid crystal polyester pellet composition comprising a first pellet and a second pellet; wherein:

the first pellet is a pellet comprising a liquid crystal polyester; the second pellet is a pellet comprising an organic pigment, an organic dye or carbon black and a liquid crystal polyester, and the second pellet is different from the first pellet;
the melt viscosity of the first pellet is preferably 10 Pa·s or more and 45 Pa·s or less, more preferably 15 Pa·s or more and 40 Pa·s or less, and even more preferably 20 Pa·s or more and 35 Pa·s or less;
the melt viscosity of the second pellet is preferably 1 Pa·s or more and 60 Pa·s or less, more preferably 1 Pa·s or more and 50 Pa·s or less, and even more preferably 2 Pa·s or more and 50 Pa·s or less; and
the melt viscosity ratio represented by the melt viscosity of the second pellet/the melt viscosity of the first pellet is preferably 0.1 or more and less than 3.2, more preferably 0.1 or more and 2.5 or less, even more preferably 0.5 or more and 2 or less, and particularly preferably 0.7 or more and 1.8 or less.

<2> The liquid crystal polyester pellet composition according to <1>, wherein:

the first pellet contains a filler; and
the content of the filler is preferably 10% by mass or more and 60% by mass or less, more preferably 20% by mass or more and 50% by mass or less, and even more preferably 30% by mass or more and 45% or less, with respect to the total mass (100% by mass) of the first pellet.

<3> The liquid crystal polyester pellet composition according to <1> or <2>, wherein the total content of the organic pigment, organic dye and carbon black in the second pellet is preferably 1% by mass or more and 35% by mass or less, more preferably 5% by mass or more and 30% by mass or less, and even more preferably 8% by mass or more and 25% by mass or less, with respect to the total mass (100% by mass) of the second pellet.

<4> The liquid crystal polyester pellet composition according to any one of <1> to <3>, wherein:

the content of the first pellet is preferably 85% by mass or more and 99.9% by mass or less, more preferably 93% by mass or more and 99.5% by mass or less, and even more preferably 95% by mass or more and 99% or less, with respect to the total mass (100% by mass) of the liquid crystal polyester pellet composition; and
the content of the second pellet is preferably 0.1% by mass or more and 15% by mass or less, more preferably 0.5% by mass or more and 7% by mass or less, and even more preferably 1% by mass or more and 5% or less, with respect to the total mass (100% by mass) of the liquid crystal polyester pellet composition.

<5> The liquid crystal polyester pellet composition according to any one of <2> to <4>, wherein the filler is a glass fiber or talc.

<6> The liquid crystal polyester pellet composition having a property that a standard deviation of a lightness (L*σ) is preferably less than 1.5, more preferably 1.2 or less, and even more preferably 1 or less when the liquid crystal polyester pellet composition according to any one of <1> to <5> is subjected to injection molding using an injection molding machine ("Model PS40E5ASE", manufactured by NISSEI PLASTIC INDUSTRIAL CO., LTD.) under the conditions of a cylinder temperature of 350°C, a mold temperature of 120°C and an injection rate of 75 mm/s; 20 injection molded articles of ASTM No. 4 dumbbells of 64 mm × 64 mm × 1 mm are produced; the 20 injection molded articles are subjected to measurement of lightness (L*: SCE method) using a color difference meter ("CM-3600d" manufactured by KONICA MINOLTA, INC.); and the standard deviation of the lightness (L*σ) is calculated for the 20 injection molded articles.

(Injection molded article)

The injection molded article according to one aspect of the present invention is one produced by using the liquid crystal polyester pellet composition according to one aspect of the present invention described above.

The injection molded article of one embodiment is one produced by using the liquid crystal polyester pellet composition described above as a molding material and molding it by an injection molding method. Specifically, the liquid crystal polyester pellet composition is molded by melting it and injecting the molten liquid crystal polyester pellet composition into a mold, using a known injection molding machine. Examples of the known injection molding machine include a hydraulic horizontal molding machine, "Model PS40E5ASE" manufactured by NISSEI PLASTIC INDUSTRIAL CO., LTD.

The cylinder temperature of the injection molding machine is preferably set to a temperature 10 to 50°C higher than the flow starting temperature of the liquid crystal polyester to be used.

The mold temperature is preferably set to a temperature ranging from room temperature (for example, 23°C) to 180°C, in view of the cooling rate of the liquid crystal polyester pellet composition and productivity.

The injection molded articles of one embodiment described above have suppressed variations in color tone between the molded articles, since the liquid crystal polyester pellet composition according to the present invention is used.

The injection molded article is thus improved in design and can be used in applications in the field of outer parts.

The injection molded article according to one aspect of the present invention can be used in all applications to which liquid crystal polyesters can be applied. Examples thereof include casing interior parts for various electrical and electronic devices, automobile parts, home appliance parts, industrial machine parts and daily miscellaneous goods. In particular, such an injection molded article is useful in applications in which colored products are used, and is suitable for achieving color variations.

Examples of the electrical and electronic device include a camera, a personal computer, a mobile phone, a smartphone, a tablet, a printer and a projector. Examples of the casing interior parts for such electrical and electronic devices include a connector, a camera module, a blower fan, and a fixing part for a printer. In addition, such an injection molded article can be suitably used for an in-car electrical and electronic device.

Examples

Hereinafter, the present invention will be described in detail with reference to examples thereof, but the present invention will not be limited to the examples.

[Flow starting temperature of liquid crystal polyester]

In this example, the flow starting temperature of a liquid crystal polyester was measured as follows.

Using a flow tester ("Model CFT-500EX " manufactured by SHIMADZU CORPORATION), approximately 2 g of a liquid crystal polyester was filled into a cylinder equipped with a die having a nozzle with an inner diameter of 1 mm and a length of 10 mm; was melted and extruded from a nozzle while increasing the temperature at a rate of 4°C/min under a load pf 9.8 MPa; and was subjected to measurement of the temperature at which the viscosity of 4,800 Pa·s was exhibited. The temperature was taken as a flow starting temperature.

<Materials to be used>

The liquid crystal polyester, organic pigment, and filler used in this example are shown below.

• Liquid crystal polyester

Each of liquid crystal polyesters (1) to (5) obtained in Production Examples 1 to 5 below was used.

[Production Example 1 (Production of liquid crystal polyester (1))]

Into a reactor equipped with a stirrer, a torque meter, a nitrogen gas inlet tube, a thermometer and a reflux condenser, were placed 994.5 g (7.2 mol) of p-hydroxybenzoic acid, 446.9 g (2.4 mol) of 4,4'-dihydroxybiphenyl, 239.2 g (1.44 mol) of terephthalic acid, 159.5 g (0.96 mol) of isophthalic acid and 1,347.6 g (13.2 mol) of acetic anhydride. After replacing the gas in the reactor with nitrogen gas, 0.2 g of 1-methylimidazole was added to the mixture, and while stirring under a nitrogen gas flow, the temperature of the resulting mixture was increased from room temperature to 150°C over 30 minutes, followed by refluxing at 150°C for 30 minutes.

Next, 0.9 g of 1-methylimidazole was added thereto, and the temperature of the resulting mixture was increased from 150°C to 320°C over 2 hours and 50 minutes while distilling off acetic acid produced as a by-product and unreacted acetic anhydride. At the time when an increase in torque was observed, the content was taken out from the reactor and allowed to cool to room temperature to obtain a prepolymer as a solid.

The obtained solid was ground with a grinder to a particle diameter of 0.1 to 1 mm, and the ground product was then subjected to solid-state polymerization, under a nitrogen atmosphere, by increasing the temperature from room temperature to 220°C over 1 hour and then from 220°C to 240°C over 30 minutes and keeping the temperature at 240°C for 10 hours.

The obtained solid phase polymer was allowed to cool to room temperature to obtain a powdery liquid crystal polyester (1). The obtained liquid crystal polyester (1) had a flow starting temperature of 286°C.

The liquid crystal polyester (1) has, with respect to the total of all repeating units, 60 mol% of a repeating unit (1) wherein $Ar^1$ is a 1,4-phenylene group; 8 mol% of a repeating unit (2) wherein $Ar^2$ is a 1,3-phenylene group, and 12 mol% of a repeating unit (2) wherein $Ar^2$ is a 1,4-phenylene group; and 20 mol% of a repeating unit (3) wherein $Ar^3$ is a 4,4'-biphenylylene group and both of X and Y are oxygen atoms.

[Production Example 2 (Production of liquid crystal polyester (2))]

Into a reactor equipped with a stirrer, a torque meter, a nitrogen gas inlet tube, a thermometer and a reflux condenser, were placed 994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid and 1,347.6 g (13.2 mol) of acetic anhydride. 0.2 g of 1-methylimidazole was added thereto as a catalyst and the gas in the reactor was sufficiently replaced with nitrogen gas. Thereafter, while stirring under a nitrogen gas flow, the temperature of the mixture was increased from room temperature to 150°C over 30 minutes, followed by refluxing for 30 minutes while keeping it at the same temperature.

Next, 0.9 g of 1-methylimidazole was added thereto, and the temperature of the resulting mixture was increased from 150°C to 320°C over 2 hours and 50 minutes while distilling off acetic acid produced as a by-product and unreacted acetic anhydride. After keeping at 320°C for 30 minutes, the content was taken out from the reactor and allowed to cool to room temperature.

The obtained solid was ground with a grinder to a particle diameter of 0.1 to 1 mm, and the ground product was then subjected to solid-state polymerization, under a nitrogen atmosphere, by increasing the temperature from room temperature to 250°C over 1 hour and then from 250°C to 285°C over 5 hours and keeping the temperature at 285°C for 3 hours.

After solid-phase polymerization, the resultant was cooled to obtain a powdery liquid crystal polyester (2). The obtained liquid crystal polyester (2) had a flow starting temperature of 327°C.

The liquid crystal polyester (2) has, with respect to the total of all repeating units, 60 mol% of a repeating unit (1) wherein $Ar^1$ is a 1,4-phenylene group; 5 mol% of a repeating unit (2) wherein $Ar^2$ is a 1,3-phenylene group, and 15 mol% of a repeating unit (2) wherein $Ar^2$ is a 1,4-phenylene group; and 20 mol% of a repeating unit (3) wherein $Ar^3$ is a 4,4'-biphenylylene group and both of X and Y are oxygen atoms.

[Production Example 3 (Production of liquid crystal polyester (3))]

Into a reactor equipped with a stirrer, a torque meter, a nitrogen gas inlet tube, a thermometer and a reflux condenser, were placed 994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid and 1,347.6 g (13.2 mol) of acetic anhydride. 0.2 g of 1-methylimidazole was added thereto as a catalyst and the gas in the reactor was sufficiently replaced with nitrogen gas. Thereafter, while stirring under a nitrogen gas flow, the temperature of the resulting mixture was increased from room temperature to 150°C over 30 minutes, followed by refluxing for 30 minutes while keeping it at the same temperature.

Next, the temperature of the resulting mixture was increased from 150°C to 320°C over 2 hours and 50 minutes while distilling off acetic acid produced as a by-product and unreacted acetic anhydride. After keeping at 320°C for 30 minutes, the content was taken out from the reactor and allowed to cool to room temperature.

The obtained solid was ground with a grinder to a particle diameter of 0.1 to 1 mm, and the ground product was then subjected to solid-state polymerization, under a nitrogen atmosphere, by increasing the temperature from room temperature to 250°C over 1 hour and then from 250°C to 295°C over 5 hours and keeping the temperature at 295°C for 3 hours.

After solid-phase polymerization, the resultant was cooled to obtain a powdery liquid crystal polyester (3). The obtained liquid crystal polyester (3) had a flow starting temperature of 333°C.

The liquid crystal polyester (3) has, with respect to the total of all repeating units, 60 mol% of a repeating unit (1) wherein $Ar^1$ is a 1,4-phenylene group; 5 mol% of a repeating unit (2) wherein $Ar^2$ is a 1,3-phenylene group, and 15 mol% of a repeating unit (2) wherein $Ar^2$ is a 1,4-phenylene group; and 20 mol% of a repeating unit (3) wherein $Ar^3$ is a 4,4'-biphenylylene group and both of X and Y are oxygen atoms.

[Production Example 4 (Production of liquid crystal polyester (4))]

Into a reactor equipped with a stirrer, a torque meter, a nitrogen gas inlet tube, a thermometer and a reflux condenser, were placed 994.5 g (7.2 mol) of p-hydroxybenzoic acid, 446.9 g (2.4 mol) of 4,4'-dihydroxybiphenyl, 328.9 g (2.0 mol) of terephthalic acid, 69.8 g (0.5 mol) of isophthalic acid and 1,347.6 g (13.2 mol) of acetic anhydride. 0.2 g of 1-methylimidazole was added thereto and the gas in the reactor was sufficiently replaced with nitrogen gas.

Thereafter, under a nitrogen gas flow, the temperature of mixture was increased from room temperature to 150°C over 30 minutes, followed by refluxing for 1 hour while keeping it at the same temperature.

Next, the temperature of the resulting mixture was increased from 150°C to 320°C over 2 hours and 50 minutes while distilling off acetic acid produced as a by-product and unreacted acetic anhydride. When an increase in torque was found, the reaction was completed to obtain a prepolymer.

The obtained prepolymer was ground with a grinder to a particle diameter of 0.1 to 1 mm, and the ground product was then subjected to solid-state polymerization, under a nitrogen atmosphere, by increasing the temperature from room temperature to 250°C over 1 hour and then from 250°C to 300°C over 5 hours and keeping the temperature at 300°C for 3 hours.

After solid-phase polymerization, the resultant was cooled to obtain a powdery liquid crystal polyester (4). The obtained liquid crystal polyester (4) had a flow starting temperature of 348°C.

The liquid crystal polyester (4) has, with respect to the total of all repeating units, 60 mol% of a repeating unit (1) wherein $Ar^1$ is a 1,4-phenylene group; 3.5 mol% of a repeating unit (2) wherein $Ar^2$ is a 1,3-phenylene group, and 16.5 mol% of a repeating unit (2) wherein $Ar^2$ is a 1,4-phenylene group; and 20 mol% of a repeating unit (3) wherein $Ar^3$ is a 4,4'-biphenylylene group and both of X and Y are oxygen atoms.

[Production Example 5 (Production of liquid crystal polyester (5))]

Into a reactor equipped with a stirrer, a torque meter, a nitrogen gas inlet tube, a thermometer and a reflux condenser, were placed 994.5 g (7.2 mol) of p-hydroxybenzoic acid, 446.9 g (2.4 mol) of 4,4'-dihydroxybiphenyl, 358.8 g (2.2 mol) of terephthalic acid, 39.9 g (0.4 mol) of isophthalic acid and 1,347.6 g (13.2 mol) of acetic anhydride. 0.2 g of 1-methylimidazole was added thereto and the gas in the reactor was sufficiently replaced with nitrogen gas.

Thereafter, under a nitrogen gas flow, the temperature of the resulting mixture was increased from room temperature to 150°C over 30 minutes, followed by refluxing for 1 hour while keeping it at the same temperature.

Next, the temperature of the resulting mixture was increased from 150°C to 320°C over 2 hours and 50 minutes while distilling off acetic acid produced as a by-product and unreacted acetic anhydride. When an increase in torque was found, the reaction was completed to obtain a prepolymer.

The obtained prepolymer was ground with a grinder to a particle diameter of 0.1 to 1 mm, and the ground product was then subjected to solid-state polymerization, under a nitrogen atmosphere, by increasing the temperature from room temperature to 250°C over 1 hour and then from 250°C to 305°C over 5 hours and keeping the temperature at 305°C for 3 hours.

After solid-phase polymerization, the resultant was cooled to obtain a powdery liquid crystal polyester (5). The obtained liquid crystal polyester (5) had a flow starting temperature of 357°C.

The liquid crystal polyester (5) has, with respect to the total of all repeating units, 60 mol% of a repeating unit (1) wherein $Ar^1$ is a 1,4-phenylene group; 2 mol% of a repeating unit (2) wherein $Ar^2$ is a 1,3-phenylene group, and 18 mol% of a repeating unit (2) wherein $Ar^2$ is a 1,4-phenylene group; and 20 mol% of a repeating unit (3) wherein $Ar^3$ is a 4,4'-biphenylylene group and both of X and Y are oxygen atoms.

• Organic pigment

Pigment (1): PV Fast Red B, manufactured by Clariant AG; melting point: 400°C or more
Pigment (2): Polysyntheren Yellow NG, manufactured by Clariant AG; melting point: approximately 325°C
Pigment (3): PV Fast Blue BG, manufactured by Clariant AG; melting point approximately 320°C

• Filler

Glass fiber (1): EFH75-01, manufactured by Central Glass Co., Ltd.; number average fiber length: 75 μm; fiber diameter: 10 μm
Glass fiber (2): CS3J260S, manufactured by Nitto Boseki Co., Ltd.; number average fiber length: 3 mm; number average fiber diameter: 11 μm
Glass fiber (3): CS03DE260S, manufactured by Nitto Boseki Co., Ltd.; number average fiber length: 3 mm; fiber diameter: 6.5 μm

Talc: GH7, manufactured by Hayashi Kasei Co., Ltd.; volume average particle diameter: 7 μm

<Production Example of first pellet>

Each of the first pellet was produced by mixing liquid crystal polyesters and fillers in the proportions shown in Table 1.

Specifically, the liquid crystal polyesters and the fillers were melt-kneaded in the proportions shown in Table 1 with a twin-screw extruder ("PCM-30", manufactured by Ikegai Corp) under conditions of a cylinder temperature of 340°C and a screw rotation speed of 150 rpm to obtain a melt-kneaded product.

Next, the obtained melt-kneaded product was discharged in the form of a strand through a circular discharge outlet and cooled, followed by pelletization to obtain each of the first pellets (1) to (3).

<Production Example of second pellet>

Each of the second pellets was produced by mixing a liquid crystal polyester and an organic pigment in the proportions shown in Table 2.

Specifically, the liquid crystal polyester and the pigment were melt-kneaded in the proportions shown in Table 2 with a twin-screw extruder ("PCM-30", manufactured by Ikegai Corp) under conditions of a cylinder temperature of 340°C and a screw rotation speed of 150 rpm to obtain a melt-kneaded product.

Next, the obtained melt-kneaded product was discharged in the form of a strand through a circular discharge outlet and cooled followed by pelletization to obtain each of the second pellets (1) to (8).

[Measurement of melt viscosity]

The melt viscosity of each of the first pellets and the second pellets was measured with a capillary rheometer ("Capilograph 1D", manufactured by TOYO SEIKI CO., LTD). A capillary with ϕ 0.5 mm × 10 mm was used.

The melt viscosity of each of the first pellets and the second pellets was measured by placing 20 g of the pellet that had been dried at 120°C for 3 hours into a cylinder set at 350°C, which was the same temperature as the cylinder temperature during each injection molding; and measuring the melt viscosity at a shear rate of $1000s^{-1}$ in accordance with ISO 11443. The measurement results are shown in Tables 1 and 2.

[Table 1]

|  |  | First pellet (1) | First pellet (2) | First pellet (3) |
|---|---|---|---|---|
| Liquid crystal polyester (1) | parts by mass | 45 | - | 45 |
| Liquid crystal polyester (2) | | 55 | - | 55 |
| Liquid crystal polyester (3) | | - | 100 | - |
| Glass fiber (1) | | 54 | - | - |
| Glass fiber (2) | | - | 67 | - |
| Glass fiber (3) | | - | - | 16 |
| Talc | | - | - | 50 |
| Melt viscosity of pellet | [Pa · s] | 27 | 31 | 24 |

[Table 2]

| | | Second pellet (1) | Second pellet (2) | Second pellet (3) | Second pellet (4) | Second pellet (5) | Second pellet (6) | Second pellet (7) | Second pellet (8) |
|---|---|---|---|---|---|---|---|---|---|
| Liquid crystal polyester (1) | parts by mass | 100 | - | - | - | - | - | - | - |
| Liquid crystal polyester (2) | | - | 100 | - | 100 | - | - | - | - |
| Liquid crystal polyester (3) | | - | - | 100 | - | 100 | - | 100 | - |
| Liquid crystal polyester (4) | | - | - | - | - | - | - | - | 100 |
| Liquid crystal polyester (5) | | - | - | - | - | - | 100 | - | - |
| Pigment (1) | | 25 | 25 | 25 | - | - | - | - | - |
| Pigment (2) | | - | - | - | 11 | 11 | 11 | - | - |
| Pigment (3) | | - | - | - | - | - | - | 11 | 11 |
| Melt viscosity of pellet | [Pa · s] | 3 | 15 | 42 | 17 | 26 | 611 | 17 | 98 |

<Production of liquid crystal polyester pellet composition)

(Examples 1 to 6 and Comparative Examples 1 and 2)

The first pellet and the second pellet obtained in "Production Example of fist pellet" and "Production Example of second pellet" as described above were blended in the proportions shown in Table 3, and mixed at a rotation speed of 30 revolutions/minute for 10 minutes with a tumbler mixer ("SKD-25", manufactured by PLAENG CO., LTD) to obtain a liquid crystal polyester pellet composition of each Example, which consisted of a pellet mixture.
In Table 3, "melt viscosity of second pellet/melt viscosity of first pellet" is the ratio (melt viscosity ratio) between the melt viscosity of the first pellet shown in Table 1 and the melt viscosity of the second pellet shown in Table 2.

<Production of injection molded article>

The liquid crystal polyester pellet composition of each Example was subjected to injection molding with an injection molding machine ("Model PS40E5ASE", manufactured by NISSEI PLASTIC INDUSTRIAL CO., LTD.) under the conditions of a cylinder temperature of 350°C, a mold temperature of 120°C and an injection rate of 75 mm/s to produce 20 plate-shaped injection molded articles shown below.

Shape of injection molded article: 64 mm × 64 mm × 1 mm, ASTM No. 4 dumbbell

<Evaluation>

Twenty injection molded articles having dimensions of 64 mm × 64 mm × 1 mm were subjected to measurement of lightness (L*: SCE method) according to the L*a*b* color system under the measurement conditions shown below with a color difference meter ("CM-3600d", manufactured by KONICA MINOLTA, INC.). Then, the standard deviation of the lightness (L*σ) was determined for each of the 20 injection molded articles. The resulting values are shown in Table 3.
Measurement conditions: illumination/viewing system D65; C light source; observation field of view: 10°; and diameter of measurement area: 25.4 mm. Wavelengths of 400 nm or less were cut. The vicinity of the center of the 64 mm × 64 mm surface of the injection molded article was subjected to measurement.
A smaller value of the standard deviation of lightness (L*σ) means that variations in color tone between injection molded articles are suppressed more.

[Table 3]

| | | | Example 1 | Example 2 | Example 3 | Example 4 | Comparative Example 1 | Example 5 | Example 6 | Comparative Example 2 |
|---|---|---|---|---|---|---|---|---|---|---|
| First pellet | (1) | parts by mass | 100 | 100 | 100 | - | - | - | - | - |
| | (2) | | - | 100 | - | 100 | 100 | - | - | - |
| | (3) | | - | - | - | - | - | 100 | 100 | 100 |
| Second pellet | (1) | | 4 | - | - | - | - | - | - | - |
| | (2) | | - | 4 | - | - | - | - | - | - |
| | (3) | | - | - | 4 | - | - | - | - | - |
| | (4) | | - | - | - | - | - | 5 | - | - |
| | (5) | | - | - | - | - | - | - | 5 | - |
| | (6) | | - | - | - | - | - | - | - | 5 |
| | (7) | | - | - | - | 5 | - | - | - | - |
| | (8) | | - | - | - | - | 5 | - | - | - |
| Melt viscosity of second pellet / Melt viscosity of first pellet | | | 0.1 | 0.6 | 1.6 | 0.6 | 3.2 | 0.7 | 1.1 | 25.5 |
| Evaluation | Standard deviation of lightness ($L^* \sigma$) | | 0.8 | 1.0 | 1.2 | 0.7 | 1.5 | 0.4 | 0.4 | 1.6 |

From the results shown in Table 3, it was found that the injection molded articles produced by using the liquid crystal polyester pellet compositions of inventive Examples 1 to 6 were smaller in L*σ and thus had further suppressed variations in color tone between the articles, as compared to the injection molded articles produced by using the liquid crystal polyester pellet compositions of Comparative Examples 1 and 2.

Although preferred embodiments of the present invention have been described above, the present invention is not intended to be limited to these embodiments. Any addition, omission, substitution and other changes of the features can be made without departing from the spirit of the present invention. The invention is not intended to be limited by the foregoing description, and it is intended to be limited only by the scope of the appended claims.

**Claims**

1. A liquid crystal polyester pellet composition comprising a first pellet and a second pellet wherein:

   the first pellet is a pellet comprising a liquid crystal polyester;
   the second pellet is a pellet comprising an organic pigment, an organic dye or carbon black and a liquid crystal polyester, and the second pellet is different from the first pellet; and
   a melt viscosity ratio represented by melt viscosity of the second pellet/melt viscosity of the first pellet is less than 3.2.

2. The liquid crystal polyester pellet composition according to claim 1, wherein a total content of the organic pigment, the organic dye and the carbon black in the second pellet is 1 part by mass or more and 40 parts by mass or less, with respect to 100 parts by mass of the liquid crystal polyester in the second pellet.

3. The liquid crystal polyester pellet composition according to claim 1 or 2, wherein a content of the second pellet is 1 part by mass or more and 20 parts by mass or less, with respect to 100 parts by mass of the first pellet.

4. An injection molded article produced by using the liquid crystal polyester pellet composition according to any one of claims 1 to 3.

| **INTERNATIONAL SEARCH REPORT** | International application No. |
|---|---|
| | **PCT/JP2022/031486** |

**A.    CLASSIFICATION OF SUBJECT MATTER**

*C08L 67/00*(2006.01)i; *B29C 45/00*(2006.01)i; *C08G 63/60*(2006.01)i; *C08J 3/22*(2006.01)i; *C08K 3/04*(2006.01)i;
*C08K 5/00*(2006.01)i
FI:    C08L67/00; C08K3/04; C08K5/00; C08G63/60; B29C45/00; C08J3/22 CFD

According to International Patent Classification (IPC) or to both national classification and IPC

**B.    FIELDS SEARCHED**

Minimum documentation searched (classification system followed by classification symbols)

C08L67/00; B29C45/00; C08G63/60; C08J3/22; C08K3/04; C08K5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2008-513558 A (CLARIANT MASTERBATCHES (DEUTSCHLAND) GMBH) 01 May 2008 (2008-05-01) claims, paragraphs [0031], [0033], examples | 1-4 |
| Y | WO 2015/076112 A1 (TORAY INDUSTRIES, INC.) 28 May 2015 (2015-05-28) claims, paragraphs [0043]-[0046], examples | 1-4 |
| Y | JP 2021-28381 A (SUMITOMO CHEMICAL CO., LTD.) 25 February 2021 (2021-02-25) claims, examples | 1-4 |
| A | JP 2021-28376 A (SUMITOMO CHEMICAL CO., LTD.) 25 February 2021 (2021-02-25) entire text | 1-4 |
| A | JP 2011-52045 A (UNITIKA LTD.) 17 March 2011 (2011-03-17) entire text | 1-4 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2022** | **11 October 2022** |
| Name and mailing address of the ISA/JP | Authorized officer |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/031486**

| Patent document cited in search report | | | Publication date (day/month/year) | Patent family member(s) | | | Publication date (day/month/year) |
|---|---|---|---|---|---|---|---|
| JP | 2008-513558 | A | 01 May 2008 | US | 2008/0085959 | A1 | |
| | | | | claims, paragraphs [0039], [0041], examples | | | |
| | | | | WO | 2006/032423 | A1 | |
| | | | | EP | 1794215 | A1 | |
| | | | | DE | 102004045639 | A | |
| | | | | CN | 101023121 | A | |
| | | | | KR | 10-2007-0083576 | A | |
| | | | | ES | 2429398 | T | |
| | | | | TW | 200619336 | A | |
| WO | 2015/076112 | A1 | 28 May 2015 | CN | 105637018 | A | |
| | | | | KR | 10-2016-0089360 | A | |
| | | | | TW | 201524775 | A | |
| JP | 2021-28381 | A | 25 February 2021 | WO | 2021/029110 | A1 | |
| | | | | claims, examples | | | |
| | | | | CN | 114206995 | A | |
| | | | | TW | 202112958 | A | |
| JP | 2021-28376 | A | 25 February 2021 | WO | 2021/029265 | A1 | |
| | | | | CN | 114222790 | A | |
| | | | | TW | 202112918 | A | |
| JP | 2011-52045 | A | 17 March 2011 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021136442 A

- JP 6248165 A

**Non-patent literature cited in the description**

- **NAOYUKI KOIDE.** Liquid Crystal Polymers - Synthesis, Molding, Applications. CMC Publishing Co., Ltd, 05 June 1987, 95